(19) Europäisches Patentamt / European Patent Office / Office européen des brevets

(11) **EP 3 276 316 B1**

(12) **FASCICULE DE BREVET EUROPEEN**

(45) Date de publication et mention de la délivrance du brevet:
**19.02.2020 Bulletin 2020/08**

(51) Int Cl.:
***G01K 17/20*** *(2006.01)*

(21) Numéro de dépôt: **17183675.2**

(22) Date de dépôt: **28.07.2017**

(54) **DISPOSITIF DE MESURAGE DES DÉPERDITIONS THERMIQUES À TRAVERS L'ENVELOPPE D'UN BÂTIMENT, PROCÉDÉ MIS EN OEUVRE DANS UN TEL DISPOSITIF ET MODULE UTILISÉ DANS UN TEL DISPOSITIF**

VORRICHTUNG ZUM MESSEN DER WÄRMEVERLUSTE ÜBER EINE GEBÄUDEHÜLLE, VERFAHREN ZUR ANWENDUNG DIESER VORRICHTUNG UND IN DIESER VORRICHTUNG VERWENDETES MODUL

DEVICE FOR MEASURING HEAT LOSS THROUGH THE ENVELOPE OF A BUILDING, METHOD IMPLEMENTED IN SUCH A DEVICE AND MODULE USED IN SUCH A DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.07.2016 FR 1657266**

(43) Date de publication de la demande:
**31.01.2018 Bulletin 2018/05**

(73) Titulaire: **Centre Scientifique et Technique du Batiment**
**77420 Champs sur Marne (FR)**

(72) Inventeurs:
- **BOUCHIE, Rémi**
  **93220 GAGNY (FR)**
- **SCHETELAT, Pascal**
  **38700 LA TRONCHE (FR)**
- **DEROUINEAU, Stéphanie**
  **77170 BRIE COMTE ROBERT (FR)**
- **THEBAULT, Simon**
  **94360 BRY SUR MARNE (FR)**

(74) Mandataire: **Chaffraix, Jean**
**Brandon IP**
**64, rue Tiquetonne**
**75002 Paris (FR)**

(56) Documents cités:
**EP-A2- 2 674 737 WO-A1-2012/028829**

- **Rémi Bouchié ET AL: "Short methodologies for in-situ assessment of the intrinsic thermal performance of the building envelope", Conference Sustainable Places 2014, 23 décembre 2015 (2015-12-23), XP055365336, Nice, France Extrait de l'Internet: URL:https://www.researchgate.net/profile/Simon_Thebault/publication/287923318_Short_methodologies_for_in-situ_assessment_of_the_intrinsic_thermal_performance_of_the_building_envelope/links/567a7a8608ae40c0e27f5181/Short-methodologies-for-in-situ-assessment-of-the-intrinsic-thermal-performance-of-the-bui [extrait le 2017-04-19]**
- **Stéphanie Derouineau: "Petit déjeuner professionnel IR5 - La performance énergétique effective des bâtiments", , 13 janvier 2016 (2016-01-13), XP055365345, Extrait de l'Internet: URL:http://www.chaireeconomieduclimat.org/wp-content/uploads/2016/01/13-01-2016_CEC_PtDejPro_CSTB_Derouineau.pdf [extrait le 2017-04-19]**

EP 3 276 316 B1

## Description

La présente invention concerne un dispositif de mesurage des déperditions thermiques à travers l'enveloppe d'un bâtiment ainsi que le procédé pour mettre en œuvre ce dispositif et module convenant pour la mise en application du procédé.

Pour cela, un tel dispositif est remarquable en ce qu'il permet l'évaluation de l'isolation thermique de l'enveloppe d'un bâtiment par la mesure, in situ, d'indicateurs de déperditions thermiques à travers l'enveloppe du bâtiment notamment :

- du coefficient de transfert thermique par transmission Htr(W/K) défini dans le norme NF EN ISO 13790:2013. Ce coefficient est une propriété intrinsèque de l'enveloppe du bâtiment testé,

- du coefficient de transfert thermique par renouvellement d'air, dû aux infiltrations d'air, Hve(W/K) défini dans le norme NF EN ISO 13790:2013. Ce coefficient dépend d'une part de l'étanchéité à l'air de l'enveloppe (propriété intrinsèque) et d'autre part des conditions climatiques et notamment du vent,

- du coefficient de déperdition thermique globale à travers l'enveloppe du bâtiment testé, dû aux infiltrations d'air et aux transmissions thermiques, Htot ( W/K) défini par la formule suivante :

$$H_{tot} = H_{tr} + H_{ve}$$

Ce coefficient dépend d'une part des propriétés intrinsèques de l'enveloppe (transmissions thermiques et étanchéité à l'air) et d'autre part des conditions climatiques et notamment du vent.

La présente invention permet de plus d'évaluer l'incertitude sur l'évaluation de ces coefficients thermiques, tenant compte de toutes les sources d'erreur listées ci-dessous :

- Incertitudes des mesures (erreurs aléatoires et systématiques)

- Incertitudes sur les données conventionnelles utilisées dans le calcul

- Incertitudes de modélisation.

Impulsée par le Grenelle de l'environnement, la généralisation des bâtiments performants est aujourd'hui engagée. Les travaux de réhabilitation et la construction de bâtiments neufs à très haute performance énergétique ne pourront se réaliser de manière massive que si les maîtres d'ouvrage ont la certitude d'obtenir les performances énergétiques prévues en phase de conception. L'ensemble de la filière s'est largement mobilisé pour répondre à ce défi, mais ne dispose pas à ce jour de solutions adaptées pour évaluer de manière opérationnelle les performances énergétiques effectives de ces bâtiments à la réception des travaux. Afin de sécuriser les acteurs de la filière et notamment de maitriser le risque de recours à la décennale lié à un désordre en matière de performance énergétique, la présente invention propose un outil simple, rapide et peu couteux de mesure de la performance énergétique intrinsèque de l'enveloppe d'un bâtiment, à sa livraison. Par performance énergétique intrinsèque, on entend celle qui résulte des processus de conception, construction (ou travaux de rénovation) et qui par conséquent caractérise la performance des ouvrages achevés qu'il s'agisse de construction neuve ou de réhabilitation lourde. Les éléments principaux responsables de cette performance et vérifiables au cours du chantier et à la réception sont l'enveloppe, les équipements techniques inclus à la construction et l'ensemble des systèmes de régulation et des préréglages de ces équipements techniques (pré-programmation horaire et préréglage des consignes, etc.). Cette performance constitue la première composante de ce qui fera in fine la performance réelle une fois le bâtiment en exploitation.

La présente invention concerne la performance intrinsèque énergétique de l'enveloppe et fournit une solution de mesure in situ de l'isolation thermique de l'enveloppe. La qualité de l'isolation thermique à la livraison des travaux est aujourd'hui principalement appréciée de manière qualitative à l'aide d'une caméra Infra Rouge. Cet outil de diagnostic permet la localisation de défauts de mise en œuvre altérant l'isolation thermique des parois mais elle ne permet pas d'apprécier leur impact quantitatif sur les performances énergétiques à l'échelle du bâtiment dans son ensemble. Des outils de diagnostics quantitatifs existent, comme par exemple la méthode fluxmétrique décrite dans la norme ISO 9869-1, mais demeurent restreints à des mesures locales sur une paroi donnée et sont généralement à applications limitées et en particulier peu adaptés aux parois fortement isolées. Dans la pratique courante, il n'est donc pas réalisé de mesure globale du niveau d'isolation thermique effectif à l'issu des travaux, faute de solutions opérationnelles disponibles. L'absence de ces solutions conduit à une incapacité à identifier l'existence de non performances significatives une fois le bâtiment en exploitation. La présente innovation vise donc à fournir un dispositif permettant de mesurer in situ l'isolation globale réelle d'un bâtiment à l'issu des travaux au travers de l'évaluation d'un indicateur opposable et son incertitude.

Une application de ce dispositif est de confronter dans le cadre de dispositifs de garantie de performance énergétique, la valeur du paramètre fourni par le dispositif de l'invention avec celui attendu au niveau de la conception du bâtiment.

L'invention permet par conséquent de mesurer le paramètre Htr, coefficient de transfert thermique par transmission qui caractérise le niveau global d'isolation de l'enveloppe du bâtiment. Ce paramètre est décrit dans la norme EN ISO 13790:2013.

L'invention permet en outre de mesurer le paramètre Hve, coefficient de transfert thermique par renouvellement d'air qui caractérise d'une part l'étanchéité à l'air de l'enveloppe du bâtiment et d'autre part les conditions climatiques durant l'essai. Ce paramètre est décrit dans la norme EN ISO 13790:2013.

Par extension la présente invention permet d'évaluer le coefficient de déperditions thermique Htot correspondant à la somme de Htr et Hve :

$$H_{tot} = H_{tr} + H_{ve}$$

Ce coefficient caractérise, d'une part, les propriétés intrinsèques de l'enveloppe (transmissions thermiques et étanchéité à l'air) et, d'autre part, les conditions climatiques durant l'essai (notamment le vent).

L'état de l'art scientifique fait état de plusieurs méthodes visant à mesurer le coefficient de déperditions thermiques (On pourra consulter à ce sujet les documents de brevet EP 2 674 737 A2, WO2012/028829 et WO 2011/1173356). L'indicateur de déperdition thermique n'est pas accessible par une mesure directe. Les méthodes sont par conséquent toutes basées sur le principe générique suivant qui consiste :

- à soumettre le bâtiment à une sollicitation thermique par le pilotage du chauffage,

- à réaliser des mesures sur la période de test de grandeurs permettant d'appréhender le bilan thermique à l'échelle du bâtiment : températures intérieures et extérieures, consommations de chauffage etc.

- à réinjecter les mesures dans un modèle thermique du bâtiment testé et procéder à une identification du coefficient recherché.

Les tests doivent être réalisés dans des conditions maîtrisées. Ces méthodes sont par conséquent majoritairement applicables sur bâtiment inoccupé afin de ne pas introduire une incertitude sur la mesure liée au comportement des occupants difficilement quantifiable à un cout raisonnable. La durée du test est conditionnée par les propriétés de stockage/déstockage de la masse et de l'humidité des parois du bâtiment considéré (respectivement appelées inertie thermique et inertie hygroscopique). Plus l'inertie d'un bâtiment est forte, plus la durée du test doit être importante pour obtenir une précision acceptable et maîtrisée sur le résultat.

Un des problèmes majeurs non traité par les différentes méthodes citées précédemment concerne l'évaluation de l'incertitude sur la mesure réalisée. Il est particulièrement complexe de quantifier l'ensemble de cette incertitude qui intègre les erreurs liées au protocole, aux mesures, au modèle thermique ainsi qu'à la méthode d'identification utilisée. Un point clé est d'appréhender l'ensemble des incertitudes, mais aussi les erreurs systématiques (biais) impliquées dans le processus.

Pour surmonter cela, la présente invention propose, selon une caractéristique importante, d'utiliser un organe d'estimation de l'incertitude des différents indicateurs mesurés par le dispositif de l'invention. Ces incertitudes tiennent compte de toutes les sources d'erreur listées ci-dessous :

- Incertitudes des mesures (erreurs aléatoires et systématiques)

- Incertitudes sur les données conventionnelles utilisées dans le calcul

- Incertitudes de modélisation.

L'incertitude est ainsi calculée par l'organe pour chaque essai, sa valeur est un indicateur de la qualité de l'essai.

Selon l'invention, un procédé de mesurage du niveau de déperditions thermiques d'un bâtiment utilisant un dispositif conforme à l'invention comporte les étapes suivantes :

- étape 1 préparation du bâtiment à mesurer
- étape 2 mise en place du dispositif de mesure
- étape 3 réalisation de l'essai
- étape 4 exploitation des données mesurées.

Ces étapes seront décrites plus en détail dans la description suivante faite en regard des dessins annexés, le tout donné à titre d'exemple non limitatif.

La figure 1 montre un bâtiment sur lequel l'invention va être appliquée,
La figure 2 montre la structure d'un module utilisé pour la mise en application de l'invention,
La figure 3 montre différents organes utilisés pour la détermination des paramètres proposés par l'invention,

Sur ces figures, les éléments communs portent tous les mêmes références sur toutes les figures.

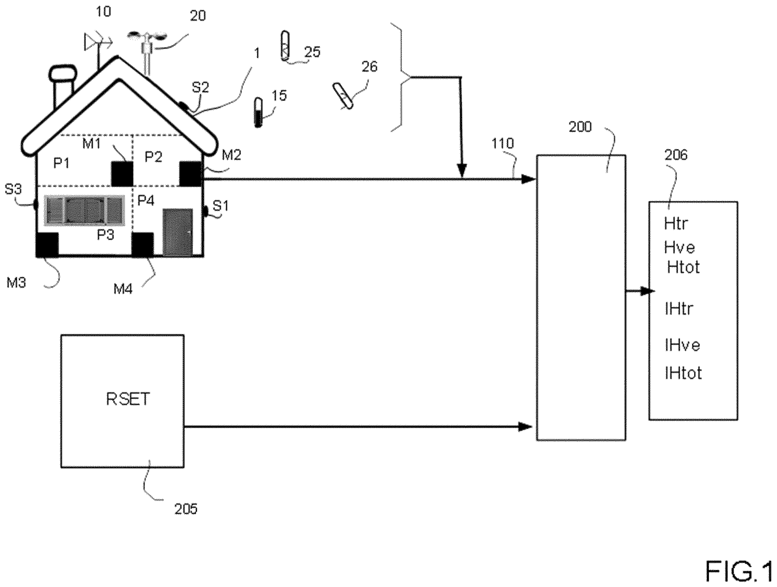

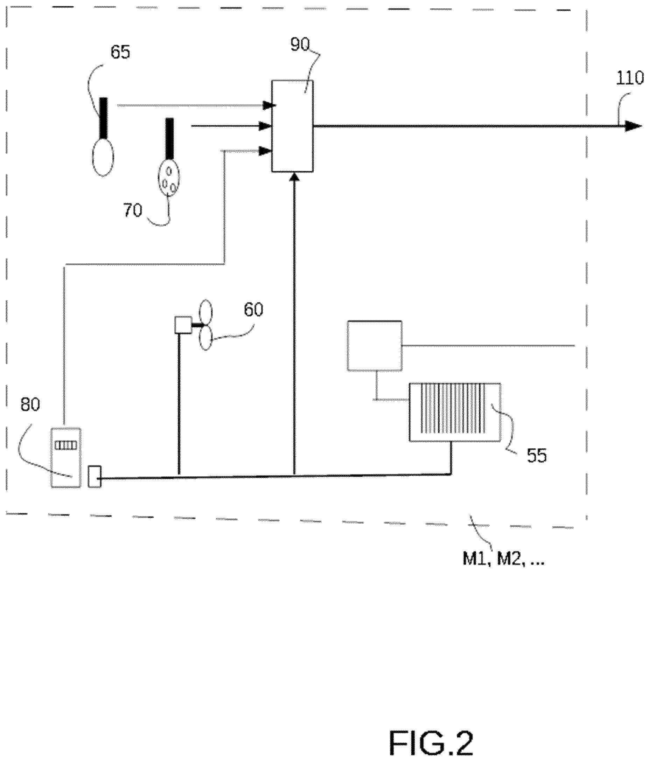

A la figure 1, la référence 1 indique un bâtiment dont on veut évaluer les indicateurs Htr Hve et Htot. Ce bâtiment est composé de différentes pièces P1, P2, P3, P4 ... dans chacune de ces pièces est installé un module intérieur M1, M2, M3, M4, montré plus en détail à la figure 2. Ces modules sont utilisés pour les mesures intérieures. Ces modules sont placés dans les pièces destinées à être chauffées, les petites pièces seront ignorées ainsi que les combles, garages etc. Une pièce est considérée petite si sa surface est inférieure à 5 m$^2$ et/ou si ses surfaces déperditives sont inférieures à 3m$^2$.

A la figure 2, est montré le détail des modules. Ils se composent :

- d'un convecteur 55 et d'un brasseur d'air 60 pour chauffer et brasser l'air de chaque pièce, Un convecteur soufflant oscillant peut être utilisé en substitution du convecteur et du brasseur d'air. Selon la configuration de la pièce, le brasseur doit être positionné de manière à limiter la stratification thermique dans le volume d'air concerné.
- d'une sonde de température d'air intérieur 65 permettant le mesurage de la température d'air conformément à la norme NF EN ISO 7726.
- d'une sonde d'humidité relative intérieure 70. Le mesurage d'humidité relative intérieure de chaque pièce est réalisé conformément à la norme NF EN ISO 7726.
- d'un compteur énergétique 80. Les consommations électriques de l'ensemble des éléments d'un module (convecteur, brasseur d'air, sondes et système d'enregistrement) sont mesurées à l'aide d'un compteur d'énergie dédié. Le compteur mesure et enregistre des consommations d'énergie active cumulée sur l'intervalle d'acquisition, qui rentrent dans la plage de celles utilisées par les appareils.
- en option, il est possible de prévoir un dispositif de mesurage du taux de renouvellement d'air par dilution de gaz traceur, conforme aux principes décrits dans la norme NF EN ISO 12569

Les mesures intérieures sont accompagnées par des mesures à l'extérieur du bâtiment, comme cela est montré à la figure 1 :

- la température d'air extérieure est mesurée par une sonde 15 abritée du soleil et des intempéries, conformément au guide de l'OMM n° 8.
- L'humidité relative extérieure est mesurée par une sonde hygrométrique 25 conformément au guide de l'OMM n° 8.
- La vitesse du vent est mesurée par un anémomètre 20 et sa direction est déterminée par une girouette 10, conformément au guide de l'OMM n° 8. Ces deux appareils seront placés, si possible, en hauteur et en terrain dégagé pour éviter les perturbations des obstacles environnants.
- Des capteurs de température extérieure équivalente S1, S2, S3 etc... sont installés de telle sorte que leurs inclinaisons/orientations soient représentatives de celles des parois déperditives du bâtiment testé (capteur SENS suivant les principes décrits dans l'article : http://ibpsa.fr/jdownloads/Conferences et Congres/IBPSA France/2014 conferen ceIBPSA/Articles/bouchie-1116.pdf).
- En option, un pyranomètre 26 permettant de mesurer le flux solaire globale horizontal conformément au guide de l'OMM n°8 est placé, si possible, en hauteur et en terrain dégagé pour éviter les perturbations des obstacles environnants.

Le dispositif est complété par un concentrateur permettant le pilotage synchronisé de l'ensemble des modules intérieurs et équipé d'un système d'enregistrement 90 collectant l'ensemble des données pour le traitement ultérieur. Ces données sont rendues accessibles sur un accès 110.

Le pas de temps d'acquisition de l'ensemble des données mesurées est au plus de 15 minutes. Les capteurs de température d'air (65, 15), les capteurs SENS (S1, S2, S3 etc.), les capteurs de consommation d'énergie (80) et de vitesse de vent (10) décrits ci-dessus sont raccordés métrologiquement conformément aux principes et aux procédures définis respectivement dans les normes FD X07-015 et NF EN ISO 10012, de telle sorte que l'incertitude de mesure de toute la chaine soit maitrisée.

Le dispositif de l'invention est également composé d'un organe d'exploitation des données d'essai 200 qui exploite les données de mesure de l'essai réalisé à l'aide desdits capteurs, et d'un fichier de description du bâtiment 205. Le fichier RSET fourni dans le cadre de l'application de la réglementation thermique RT2012 peut par exemple être utilisé. Ledit organe d'exploitation calcule ainsi les indicateurs Htr Hve et Htot et leur incertitude IHtr IHve et IHtot . L'organe d'exploitation des données 200 fonctionne sous la dépendance d'un logiciel pouvant être installé sur un ordinateur localement ou par exemple sur un serveur accessible à distance par internet. Les données proposées par l'invention sont rendues disponibles par un organe paramètre 206.

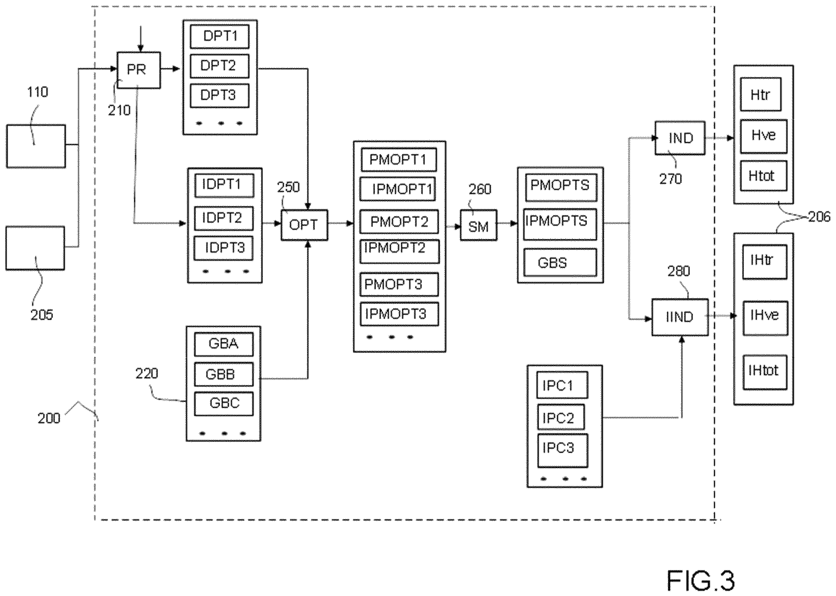

La structure ce cet organe d'exploitation 200 est explicitée à l'aide de la figure 3. Cet organe d'exploitation est constitué :

- d'un organe de prétraitement 210 (PR) des données de mesure 110 et du fichier de description 205 qui calcule :

  ○ à chaque pas de temps d'exploitation (par exemple une heure) des données prétraitées (DPT1, DPT2, DPT3...), par exemple :

    ▪ la température moyenne extérieure équivalente pour l'ensemble des surfaces extérieures du bâtiment (DPT1). La température extérieure équivalente globale des surfaces extérieures est calculée en fonction des mesures des capteurs SENS, et de la surface extérieure à l'aide de la formule suivante :

$$DPT1 = \frac{\sum_{i=1}^{n} A_i \cdot T_{em,i}}{\sum_{i=1}^{n} A_i}$$

    Où Ai est la surface intérieure totale des parois de même inclinaison et orientation que celles du capteur SENS i,
    $T_{em,i}$ : température extérieure équivalente des parois de même inclinaison et orientation que celles du capteur SENS i, calculée à partir du coefficient d'absorption énergétique des parois, des mesures du capteur SENS i et des formules présentées dans la référence http://ibpsa.fr/jdownloads/Conferences et Congres/IBPSA France/2 014 conferenceIBPSA/Articles/bouchie-1116.pdf).

■ la puissance totale de chauffage fourni à la zone chauffée du bâtiment (DPT2). Cette puissance est la somme des consommations des modules (M1,M2,M3 etc.) divisé par le pas de temps d'exploitation.

■ le débit d'infiltration entre l'extérieur et la zone chauffée du bâtiment (DPT3)

■ Le débit d'infiltration est calculé en utilisant le fichier de description du bâtiment, le résultat de la mesure d'étanchéité à l'air, les températures d'air intérieures et extérieures (température d'air et températures d'air extérieures équivalentes) ainsi que les données de vitesse de vent. La méthode de calcul (itérative) du débit d'infiltration est décrite dans la norme EN 15242. Le principe consiste à réaliser un calcul simplifié des pressions extérieures et intérieures aux différentes zones du bâtiment afin de satisfaire le bilan aéraulique. Ce calcul prend en compte un certain nombre de paramètres conventionnels, dont l'intervalle de variation est connu, afin de modéliser les débits d'infiltration dus au vent et au tirage thermique (dû à la montée de l'air chaud intérieur). Une alternative optionnelle consiste à mesurer le débit d'infiltration d'air à l'aide de la méthode de dilution de gaz traceur définie dans la norme NF EN ISO 12569.

■ la température moyenne volumique de la zone chauffée (DPT4)

■ ..

o les incertitudes (IDPT1, IDPT2...) desdites données prétraitées

- d'une banque 220 de modèles candidats (GBA, GBB, GBC...) permettant, à partir des données prétraitées (DPT1, DPT2, DPT3...) et d'un ensemble de paramètres de modèles (PM1, PM2, PM3...), d'estimer l'évolution de l'état thermique du bâtiment pour la durée de l'essai au pas de temps d'exploitation des données. Les paramètres (PM1, PM2, PM3...) de chaque modèle candidat permettent de calculer les indicateurs Htr, Hve et Htot.
- d'un organe d'estimation 250 (OPT) des paramètres optimaux (PMOPT1, PMOPT2...) d'un modèle candidat (GBA, GBB, GBC...) au vu des données prétraitées (DPT1, DPT2, DPT3...) et de leur incertitude (IDPT1, IDPT2, IDPT3...). L'optimalité pouvant être définie, par exemple, par la maximisation de la vraisemblance statistique du modèle au vu desdites données et de leur incertitude. Cet organe estime également les incertitudes sur lesdits paramètres optimaux (IPMOPT1, IPMOPT2...).
- d'un organe de sélection 260 (SM) qui sélectionne :

  ◦ Un modèle (GBS) parmi les modèles candidats (GBA, GBB, GBC...) de la banque de modèle 220 sur la base de plusieurs indicateurs numériques, par exemple : le ratio de vraisemblance, l'identifiabilité des paramètres, l'autocorrélation des résidus, le critère bayésien d'information BIC, la somme de carré des résidus...
  ◦ Les paramètres optimaux (PMOPTS) du modèle sélectionné (GBS)
  ◦ Les incertitudes sur lesdits paramètres optimaux (IPMOPTS) du modèle sélectionné (GBS)

- d'un organe de calcul des indicateurs 270 (IND) Htr, Hve et Htot à partir des paramètres optimaux PMOPTS du modèle (GBS) sélectionné par l'organe de sélection (SM)
- d'un organe de calcul des incertitudes des indicateurs 280 IIND) Htr, Hve et Htot qui exploite :

  ◦ les paramètres optimaux (PMOPTS) du modèle (GBS) sélectionné par l'organe de sélection 260
  ◦ les incertitudes des données prétraitées (IDPT1, IDPT2, IDPT3...)
  ◦ Les incertitudes desdits paramètres optimaux (IPMOPTS) du modèle (GBS) sélectionné par l'organe de sélection 260
  ◦ Les incertitudes des paramètres conventionnels (IPC1, IPC2,IPC3,...) utilisés pour le prétraitement des données de mesure, par exemple, les coefficients de pression utilisés pour le calcul des infiltrations IPC

Le procédé pour la mise en application du dispositif de l'invention consiste à chauffer le bâtiment en imposant une sollicitation programmable pour étudier la réponse du bâtiment selon les conditions extérieures durant le test et la puissance de chauffe injectée. Ce test est réalisé sur bâtiment inoccupé.

**Etape 1:** Préparation du bâtiment

Toutes les portes à l'intérieur des bâtiments sont laissées ouvertes.

- L'ensemble des menuiseries (portes et fenêtres) donnant sur l'extérieur ou sur un local non chauffé est fermé.

- Toutes les protections mobiles (stores, volets roulants ou battants, etc.) sont fermées,

- Tous les vitrages ne disposant pas de protections mobiles opaques doivent être recouverts d'une protection opaque rapportée coté extérieur si possible afin de limiter au maximum les apports solaires au travers de ces vitrages,

- Le système de ventilation est stoppé, les ouvertures sont fermées ou obturées selon les recommandations pour la réalisation d'un test d'étanchéité à l'air. (préparation identique à celle décrite dans la norme NF EN 13829)

**Etape 2:** Mise en place du dispositif de mesure.

Les dispositifs de chauffage et de mesures intérieures et extérieures sont mis en place selon les préconisations décrites ci-dessus.

**Etape 3:** Réalisation de l'essai

Selon les caractéristiques d'inertie du bâtiment, la durée du test est ajustée de 2 à 7 jours en moyenne. De manière préférentielle, l'essai se déroule dans le temps sur 3 phases :

- une phase d'évolution libre de quelques heures: la température intérieure de la maison est libre (chauffage éteint),
- une phase de chauffage: le chauffage est allumé-avec une sollicitation préprogrammée (consigne de température, consigne de puissance ou signal plus complexe),
- une phase de refroidissement libre : arrêt du chauffage et décroissance libre de la température intérieure.

La phase d'évolution libre et la phase de refroidissement sont recommandées mais pas obligatoires.

**Etape 4:** Analyse des données mesurées - Evaluation des coefficients Htr Hve et Htot de leurs incertitudes.

Préparation de l'exploitation des données : pour réaliser l'analyse des données :

- le fichier de description du bâtiment doit être collecté, ainsi que le résultat du test d'étanchéité à l'air réalisé de manière préalable sur le bâtiment.

Exploitation des données : Il permet sur la base des données collectées d'identifier les coefficients Htr Hve et Htot, ainsi que leurs incertitudes respectives IHtr IHve et IHtot
L'organe d'exploitation des données 200 est mise en œuvre :

- optionnellement au cours de l'essai pour détecter un défaut d'instrumentation

- à la fin de l'essai afin de calculer les indicateurs Htr Hve et Htot et leur incertitude

La mise en œuvre de l'organe d'exploitation peut être locale ou par exemple se faire via un accès distant par internet. L'organe d'exploitation fourni un rapport quant à l'exploitation des données qui comprend au moins les valeurs des indicateurs Htr Hve et Htot et de leur incertitude.

**Revendications**

1. Dispositif de mesurage des déperditions thermiques à travers l'enveloppe d'un bâtiment (1) formé de modules thermiques (M1, M2, ..), eux-mêmes équipés de capteurs intérieurs (65, 70,) et d'au moins un brasseur d'air (60..), situés à l'intérieur du bâtiment, de capteurs extérieurs (15, 20, 25, 30,..) situés à l'extérieur du bâtiment, d'un organe d'exploitation de données (200) et aussi d'un fichier caractéristique de bâtiments (205) **caractérisé en ce que** ledit dispositif comporte des organes de mesure pour au moins un des trois indicateurs thermiques de coefficients suivants :

   - coefficient de transfert thermique par transmission Htr(W/K) défini dans la norme NF EN ISO 13790:2013, ce coefficient étant une propriété intrinsèque de l'enveloppe du bâtiment testé,
   - coefficient de transfert thermique par renouvellement d'air, dû aux infiltrations d'air, Hve(W/K) défini dans la norme NF EN ISO 13790:2013, ce coefficient dépendant, d'une part, de l'étanchéité à l'air de l'enveloppe et, d'autre part, des conditions climatiques et notamment du vent.
   - coefficient de déperdition thermique globale à travers l'enveloppe dudit bâtiment, dû aux infiltrations d'air et aux transmissions thermiques, Htot(W/K) défini par la formule suivante :

   $$H_{tot} = H_{tr} + H_{ve}$$

   Htot dépendant, d'une part, des propriétés intrinsèques de l'enveloppe, c.à.d. transmissions thermiques et étanchéité à l'air et, d'autre part, des conditions climatiques et notamment du vent,
   et **en ce que** ledit dispositif comporte de plus:

   - au sein de l'organe d'exploitation des données (200) un ensemble de calculs pour déterminer l'incertitude sur lesdits indicateurs thermiques, tenant compte de toutes les sources d'erreur listées ci-dessous :

- incertitudes des mesures, c.à.d. des erreurs aléatoires et systématiques
- incertitudes sur les données conventionnelles utilisées dans le calcul d'incertitudes de modélisation

et **en ce que** le mesurage est basé sur une pluralité de modèles thermiques (GBA, GBB, GBC,...) associés à un organe de sélection (260) du meilleur modèle (250), au regard des mesures réalisées.

2. Dispositif selon la revendication 1 **caractérisé en ce que** l'estimation de l'incertitude sur lesdits indicateurs est calculée pour chaque essai de mesurage, sa valeur étant un indicateur de la qualité de l'essai réalisé.

3. Dispositif de mesurage selon l'une des revendications 1 à 2 **caractérisé en ce qu'**il comporte plusieurs modules intérieurs M1, M2, M3 etc. placés dans chaque pièce P1, P2, P3 etc. destinée à être chauffées, d'une part, composés chacun de :

     - d'un convecteur (55) et d'un brasseur d'air (60)
     - d'une sonde de température d'air intérieur (65)
     - d'une sonde d'humidité relative intérieure (70)
     - d'un compteur énergétique (80)
     - en option, d'un dispositif de mesurage du taux de renouvellement d'air par dilution de gaz traceur, conforme aux principes décrits dans la norme NF EN ISO 12569 :2013 et, d'autre part, à l'extérieur du bâtiment :

         - d'un anémomètre (20)
         - d'une girouette (10).
         - d'un capteur de température d'air extérieure (15)
         - d'un capteur d'humidité relative extérieure (25)
         - des capteurs SENS (S1, S2, S3 etc) installés de telle sorte que leurs inclinaisons/orientations soient représentatives de celles des parois déperditives du bâtiment testé et **caractérisés en ce qu'**ils mesurent la température extérieure équivalente
         - en option, d'un pyranomètre permettant de mesurer le flux solaire globale horizontal, le dispositif étant complété par un concentrateur permettant le pilotage synchronisé de l'ensemble des modules intérieurs et extérieurs équipé d'un système d'enregistrement (90) collectant l'ensemble des données pour le traitement ultérieur,

4. Procédé pour la mesure desdits indicateurs impliquant le dispositif selon l'une des revendications 1 à 3, comportant les étapes suivantes :

**étape 1:** préparation du bâtiment

     - toutes les portes à l'intérieur des bâtiments sont laissées ouvertes.
     - l'ensemble des menuiseries, par exemple et fenêtres, donnant sur l'extérieur ou sur un local non chauffé est fermé.
     - toutes les protections mobiles, par exemple stores, volets roulants ou battants, sont fermées,
     - tous les vitrages ne disposant pas de protections mobiles opaques doivent être recouverts d'une protection opaque rapportée coté extérieur si possible afin de limiter au maximum les apports solaires au travers de ces vitrages,
     - le système de réalisation est stoppé, les ouvertures sont fermées ou obturées selon les recommandations pour la réalisation d'un test d'étanchéité à l'air, c.à.d. la préparation identique à celle décrite dans la norme NF EN 13829 :2001,

**étape 2:** Mise en place du dispositif de mesure. les dispositifs de chauffage et de mesures intérieures et extérieures sont mis en place..
**étape 3:** Réalisation de l'essai
Selon le temps caractéristique du bâtiment, la durée du test est ajustée de 2 à 7 jours en moyenne, de manière préférentielle, l'essai se déroulant dans le temps sur 3 phases :

     - une phase d'évolution libre de quelques heures: la température intérieure de la maison étant libre, c.à.d. avec chauffage éteint,
     - une phase de chauffage: le chauffage est allumé avec une sollicitation préprogrammée réalisée par consigne de température, consigne de puissance ou signal plus complexe,
     - une phase de refroidissement libre: arrêt du chauffage et décroissance libre de la température intérieure.
     - la phase d'évolution libre et la phase de refroidissement étant recommandées mais pas obligatoires.

**étape 4:** Exploitation des données mesurées

Calcul des coefficients Htr Hve et Htot et leurs incertitudes.
le pas de temps de l'acquisition de l'ensemble des données mesurées étant d'au plus 15 minutes, lesdits capteurs de température d'air (65, 15), lesdits capteurs SENS (S1, S2, S3 etc.), lesdits capteurs de consommation d'énergie (80) et de vitesse de vent (20) étant raccordés métrologiquement conformément aux principes et aux procédures définis respectivement dans les normes FD X07-015 :2007 et NF EN ISO 10012 :2003, de telle sorte que l'incertitude de mesure de toute la chaîne d'acquisition soit maîtrisée.

5. Module thermique convenant pour un dispositif selon l'une des revendications 1 à 4 composé notamment :

- d'un convecteur (55) et d'un brasseur d'air (60)
- d'une sonde de température d'air intérieur (65)
- d'une sonde d'humidité relative intérieure (70)
- d'un compteur énergétique (80)
- en option, d'un dispositif de mesurage du taux de renouvellement d'air par dilution de gaz traceur, conforme aux principes décrits dans la norme NF EN ISO 12569 :2013

**Patentansprüche**

1. Vorrichtung zum Messen der Wärmeverluste durch die Hülle eines Gebäudes (1) hindurch, die von Wärmemodulen (M1, M2, ...), welche ihrerseits mit Innensensoren (65, 70) und mindestens einem Luftverwirbler (60, ...) ausgestattet sind, die sich im Innenbereich des Gebäudes befinden, von Außensensoren (15, 20, 25, 30, ...), die sich im Außenbereich des Gebäudes befinden, einem Datenauswertungsorgan (200) und ebenso einer charakteristischen Gebäudedatei (205) gebildet wird, **dadurch gekennzeichnet, dass** die Vorrichtung Messorgane für mindestens einen der drei folgenden Wärmeindikatoren von Koeffizienten umfasst:

- Koeffizient der Wärmeübertragung durch Transmission, Htr(W/K), der in der Norm NF EN ISO 13790:2013 definiert ist, wobei dieser Koeffizient eine innewohnende Eigenschaft der Hülle des getesteten Gebäudes ist,
- Koeffizient der Wärmeübertragung durch Luftaustausch aufgrund des Eindringens von Luft, Hve(W/K), der in der Norm NF EN ISO 13790:2013 definiert ist, wobei dieser Koeffizient einerseits von der Luftdichtigkeit der Hülle, und andererseits von den klimatischen Bedingungen und insbesondere vom Wind abhängt,
- Koeffizient des gesamten Wärmeverlusts durch die Hülle des Gebäudes hindurch aufgrund des Eindringens von Luft und den Wärmeübertragungen, Htot(W/K), der durch die folgende Formel definiert ist:

$$H_{tot} = H_{tr} + H_{ve}$$

wobei Htot einerseits von den innewohnenden Eigenschaften der Hülle, d. h. Wärmeübertragungen und Luftdichtigkeit, und andererseits von den klimatischen Bedingungen und insbesondere vom Wind abhängt,

und dadurch, dass die Vorrichtung des Weiteren umfasst:

- innerhalb des Organs zur Auswertung der Daten (200) einen Satz von Berechnungen, um die Unsicherheit bezüglich der Wärmeindikatoren unter Berücksichtigung aller der unten aufgeführten Fehlerquellen zu bestimmen:

-- Unsicherheiten der Messungen, d. h. der zufälligen und systematischen Fehler,
-- Unsicherheiten bezüglich der konventionellen Daten, die in der Berechnung von Modellierungsunsicherheiten verwendet werden,

und dadurch, dass die Messung auf einer Vielzahl von Wärmemodellen (GBA, GBB, GBC, ...) basiert, die mit einem Organ zur Auswahl (260) des besten Modells (250) im Hinblick auf die ausgeführten Messungen verknüpft ist.

2. Vorrichtung nach Anspruch 1, **dadurch gekennzeichnet, dass** die Schätzung der Unsicherheit bezüglich der Indikatoren für jeden Messversuch berechnet wird, wobei ihr Wert ein Indikator für die Qualität des ausgeführten Versuchs ist.

3. Messvorrichtung nach einem der Ansprüche 1 bis 2, **dadurch gekennzeichnet, dass** sie einerseits mehrere Innenmodule M1, M2, M3 usw. umfasst, die im jedem Raum P1, P2, P3 usw. platziert werden, der dazu bestimmt ist, geheizt zu werden, jedes bestehend aus:

- einem Konvektor (55) und einem Luftverwirbler (60),
- einer Innenluft-Temperatursonde (65),
- einer Sonde für die relative Innenluftfeuchtigkeit (70),
- einem Energiezähler (80),
- gegebenenfalls einer Vorrichtung zum Messen der Luftaustauschrate durch Verdünnung eines Spürgases gemäß den in der Norm NF EN ISO 12569:2013 beschriebenen Grundsätzen,

und andererseits im Außenbereich des Gebäudes:

- einem Windmesser (20),
- einer Wetterfahne (10),
- einem Außenluft-Temperatursensor (15),
- einem Sensor für die relative Außenluftfeuchtigkeit (25),
- SENS-Sensoren (S1, S2, S3, usw.), die derart installiert sind, dass ihre Neigungen/Ausrichtungen für diejenigen der verlustbehafteten Wände des getesteten Gebäudes repräsentativ sind, und **dadurch gekennzeichnet, dass** sie die äquivalente Außentemperatur messen,
- gegebenenfalls einem Pyrometer, das es ermöglicht, die gesamte horizontale Sonnenstrahlung zu messen, wobei die Vorrichtung von einem Konzentrator komplettiert wird, der die synchronisierte Ansteuerung der Gesamtheit der Innen- und Außenmodule ermöglicht, ausgerüstet mit einem Aufzeichnungssystem (90), das die Gesamtheit der Daten für die spätere Verarbeitung sammelt.

4. Verfahren zur Messung der Indikatoren, das die Vorrichtung nach einem der Ansprüche 1 bis 3 voraussetzt, umfassend die folgenden Schritte:

     Schritt 1: Vorbereitung des Gebäudes

        - alle die Türen im Innenbereich der Gebäude werden offen gelassen,
        - die Gesamtheit der Ausbauelemente, zum Beispiel Fenster, die zum Außenbereich oder zu einer ungeheizten Räumlichkeit führen, wird geschlossen,
        - alle die beweglichen Schutzeinrichtungen, zum Beispiel Jalousien, Rollläden oder Fensterläden, werden geschlossen,
        - alle die Verglasungen, die nicht über lichtundurchlässige bewegliche Schutzeinrichtungen verfügen, müssen mit einer lichtundurchlässigen Schutzeinrichtung abgedeckt werden, die möglichst auf der Außenseite angebracht wird, um die Sonneneinstrahlung durch diese Verglasungen hindurch weitestgehend zu begrenzen,
        - das Ausführungssystem wird angehalten, die Öffnungen werden nach den Empfehlungen für die Ausführung einer Luftdichtigkeitsprüfung geschlossen oder abgedichtet, d. h. die Vorbereitung ist mit der in der Norm NF EN 13829:2001 beschriebenen identisch,

     Schritt 2: Aufbau der Messvorrichtung
     die Heiz- und Innen- und Außen-Messeinrichtungen werden aufgebaut,
     Schritt 3: Ausführung des Versuchs
     je nach der für das Gebäude charakteristischen Zeit wird die Dauer der Prüfung im Durchschnitt von 2 bis 7 Tagen angepasst, wobei der Versuch über die Zeit hinweg vorzugsweise in 3 Phasen abläuft:

        - einer freien Entwicklungsphase von einigen Stunden: wobei die Innentemperatur des Hauses frei ist, d. h. bei ausgeschalteter Heizung,
        - einer Heizphase: die Heizung ist eingeschaltet, mit einer vorprogrammierten Belastung, die durch Temperatursollwert, Leistungssollwert oder komplexeres Signal ausgeführt wird,
        - einer freien Abkühlphase: Abschalten der Heizung und freies Absinken der Innentemperatur,
        - wobei die freie Entwicklungsphase und die Abkühlphase empfohlen, aber nicht obligatorisch sind,

     Schritt 4: Auswertung der gemessenen Daten Berechnung der Koeffizienten Htr, Hve und Htot und ihrer Unsicherheiten,
     wobei der Zeitschritt der Erfassung der Gesamtheit der gemessenen Daten höchstens 15 Minuten beträgt, wobei die Lufttemperatursensoren (65, 15), die SENS-Sensoren (S1, S2, S3, usw.), die Energieverbrauchs- (80) und Windgeschwindigkeitssensoren (20) messtechnisch gemäß den Grundsätzen und Vorgehensweisen angeschlossen sind, die jeweils in den Normen FD X07-015:2007 und NF EN ISO 10012:2003 definiert sind, derart, dass die Messunsicherheit der ganzen Erfassungskette kontrolliert wird.

5. Wärmemodul, das für eine Vorrichtung nach einem der Ansprüche 1 bis 4 geeignet ist, bestehend insbesondere aus:

        - einem Konvektor (55) und einem Luftverwirbler (60),
        - einer Innenluft-Temperatursonde (65),
        - einer Sonde für die relative Innenluftfeuchtigkeit (70),
        - einem Energiezähler (80),
        - gegebenenfalls einer Vorrichtung zum Messen der Luftaustauschrate durch Verdünnung eines Spürgases gemäß den in der Norm NF EN ISO 12569:2013 beschriebenen Grundsätzen.

## Claims

1. Device for measuring heat loss through the envelope of a building (1) formed from heat modules (M1, M2, ...), themselves provided with inside sensors (65, 70) and with at least one air blower (60, ...), located inside the building, with outside sensors (15, 20, 25, 30, ...) located outside the building, with a member for the exploitation of data (200) and also with a characteristic building file (205) **characterised in that** said device comprises members for measuring for at least one of the three following heat coefficient indicators:

- heat transfer coefficient by transmission Htr(W/K) defined in standard NF EN ISO 13790:2013, with this coefficient being an intrinsic property of the envelope of the building tested,
- heat transfer coefficient by air renewal, due to infiltrations of air, Hve(W/K) defined in standard NF EN ISO 13790:2013, with this coefficient depending, on the one hand, on the air-tightness of the envelope and, on the other hand, on the climate conditions and in particular the wind,
- global heat loss coefficient through the envelope of said building, due to infiltrations of air and to heat transmissions, Htot(W/K) defined by the following formula:

$$H_{tot} = H_{tr} + H_{ve}$$

with Htot depending, on the one hand, on the intrinsic properties of the envelope, i.e. heat transmissions and air-tightness and, on the other hand, on the climate conditions and in particular the wind,

and **in that** said device further comprises:

- within the member for the exploitation of data (200), a set of calculations for determining the uncertainty on said heat indicators, taking account of all the sources or error listed:

-- uncertainties of measurements, i.e. random and systematic errors,
-- uncertainties of the conventional data used in the calculation of modelling uncertainties,

and **in that** the measuring is based on a plurality of heat models (GBA, GBB, GBC, ...) associated with a member for selecting (260) the best model (250), with regards to the measurements taken.

2. Device according to claim 1 **characterised in that** the estimation of the uncertainty on said indicators is calculated for each measuring test, with the value thereof being an indicator of the quality of the test carried out.

3. Device for measuring according to one of claims 1 to 2 **characterised in that** it comprises several inside modules M1, M2, M3 etc. placed in each room P1, P2, P3 etc. intended to be heated, on the one hand, each comprised of:

- a convector (55) and an air blower (60),

- an indoor air temperature sensor (65),
- an indoor relative humidity sensor (70),
- an energy meter (80),
- optionally, a device for measuring the rate of air renewal by dilution of a tracer gas, in accordance with the principles described in the standard NF EN ISO 12569:2013

and, on the other hand, outside the building:

- an anemometer (20,
- a weather vane (10),
- an outdoor air temperature sensor (15),
- an outdoor relative humidity sensor (25),
- SENS sensors (S1, S2, S3 etc.) installed in such a way that their inclinations/orientations are representative of those of the heat loss walls of the building tested and **characterised in that** they measure the equivalent outdoor temperature,
- optionally, a pyranometer that makes it possible to measure the horizontal global solar flux, with the device being supplemented by a concentrator that allows for the synchronised control of all the inside and outside modules provided with a recording system (90) that collects all the data for later processing.

4. Method for measuring said indicators that entails the device according to one of claims 1 to 3, comprising the following steps:

step 1: preparation of the building

- all the doors inside the building are left open,
- all of the woodwork, for example windows, the open onto the outside on to a non-heated room is closed,
- all of the movable protective equipment, for example blinds, roller blinds, shutter, are closed,
- all of the glazing that do not have movable opaque protective equipment must be covered with an opaque protective equipment added on the exterior side if possible in order limit as much as possible the solar heat gains of these glazings,
- the production system is stopped, the openings are closed or closed off according to the recommendations for the production of an air-tightness test, i.e. the preparation identical to that described in the standard NF EN 13829:2001,

step 2: Installing the device for measuring the devices for heating and for taking inside and outside temperatures are installed,

step 3: Carrying out the test
according to the characteristic times of the building, the duration of the test is adjusted from 2 to 7 days on the average, preferably, the test unfolds over time in 3 phases:

- a free change phase of a few hours: the indoor temperature of the house being free, i.e. with the heating turned off,
- a heating phase: the heating is turned on with a preprogrammed solicitation carried out via temperature setpoint, power setpoint or a more complex signal,
- a free cooling phase: stoppage of the heating and free decrease in the indoor temperature,
- the free change phase and the cooling phase being recommended purpose not mandatory,

step 4: Exploitation of the measured data calculation of the Htr, Hve and Htot coefficients and the uncertainties thereof,
the time step of the acquisition of all the data measured being at most 15 minutes, said air temperature sensors (65, 15), said SENS sensors (S1, S2, S3 etc.), said energy consumption sensors (80) and wind speed (20) being metrologically connected in accordance with the principles and with the procedures defined respectively in the standards FD X07-015:2007 and NF EN ISO 10012:2003, in such a way that the measurement uncertainty for the entire acquisition chain is controlled.

5. Heat module suitable for a device according to one of claims 1 to 4 comprised in particular of:

- a convector (55) and an air blower (60),
- an indoor air temperature sensor (65),
- an indoor relative humidity sensor (70),
- an energy meter (80),
- optionally, a device for measuring the rate of air renewal by dilution of a tracer gas, in accordance with the principles described in the standard NF EN ISO 12569:2013.

EP 3 276 316 B1

FIG.1

FIG.2

FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2674737 A2
- WO 2012028829 A
- WO 20111173356 A